Europäisches Patentamt

European Patent Office

Office européen des brevets

(11) Veröffentlichungsnummer: **0 022 952**
**A1**

(19)

(12) **EUROPÄISCHE PATENTANMELDUNG**

(21) Anmeldenummer: 80103709.4

(22) Anmeldetag: 30.06.80

(51) Int. Cl.³: **H 02 H 7/00**
H 02 H 3/16, H 02 H 7/16

(30) Priorität: 23.07.79 DE 2929757

(43) Veröffentlichungstag der Anmeldung:
28.01.81 Patentblatt 81/4

(84) Benannte Vertragsstaaten:
DE GB SE

(71) Anmelder: SIEMENS AKTIENGESELLSCHAFT Berlin
und München
Postfach 22 02 61
D-8000 München 22(DE)

(72) Erfinder: Becker, Michael, Dipl.-Ing.
Ringstrasse 50
D-8521 Uttenreuth(DE)

(72) Erfinder: Fendt, Alfons, Dipl.-Ing.
Gleiwitzer Strasse 64
D-8520 Erlangen(DE)

(72) Erfinder: Povh, Dusan, Dr.
Waltherstrasse 3
D-8500 Nürnberg(DE)

(72) Erfinder: Renz, Klaus, Dipl.-Ing.
Heinrich-Heine-Strasse 15
D-8510 Fürth(DE)

(72) Erfinder: Schuch, Gerhard
Heuweg Nr. 8
D-8520 Erlangen(DE)

(72) Erfinder: Waldmann, Hermann, Dr.
Wiesenstrasse 14
D-8521 Weiher(DE)

(54) **Filtereingangsschutz.**

(57) Die Erfindung betrifft einen Filtereingangsschutz für einen Filterkreis, der an eine Wechsel- oder Drehstromschiene (R, S, T) über eine Schalteinrichtung 1 angeschlossen ist. Der in den Filterkreis fließende Strom wird von Strommeßwandlern (2R, 2S, 2T) meßtechnisch erfaßt. Die netzfrequente Grundschwingung des Filterstroms wird durch Unterdrückung der Oberschwingungen mit Hilfe eines Tiefpaßfilters (3a, 3b, 3c) gewonnen und durch eine Vollweg-Gleichrichterschaltung (4) in eine gleichgerichtete Spannung umgesetzt, die ohne vorherige Glättung von einem Grenzwertmelder (5) im Hinblick auf einen Grenzwert überwacht wird, bei dessen Überschreitung die Schalteinrichtung (1) ausgelöst wird. Der erfindungsgemäße Filtereingangsschutz reagiert besonders schnell, da keine Verzögerung durch ein Glättungsglied auftritt.

FIG 1

SIEMENS AKTIENGESELLSCHAFT

Berlin und München

Unser Zeichen

VPA 79 P 3131 EUR

## Filtereingangsschutz

Die Erfindung betrifft einen Filtereingangsschutz für einen Filterkreis, der an eine Wechsel- oder Drehstromschiene über eine Schalteinrichtung angeschlossen ist.

Es besteht das Problem, daß bei Erdschlüssen des Filterkreises in der Nähe der Sammelschiene sehr große Ströme aus der Sammelschiene abfließen. Diese Ströme sollen in sehr kurzer Zeit erkannt werden, so daß eine schnelle Abschaltung des Filterkreises erfolgen kann. Jedoch soll die Zuschaltung des Filterkreises, bei der ein großer Filterstrom mit der Resonanzfrequenz des Filterkreises gezogen wird, nicht zu einer Fehlauslösung führen.

Diese Aufgabe wird erfindungsgemäß dadurch gelöst, daß der in den Filterkreis fließende Strom meßtechnisch erfaßt wird und daß die netzfrequente Grundschwingung des Filterstromes durch Unterdrückung der Oberschwingungen gewonnen und durch Vollweggleichrichtung in eine gleichgerichtete Spannung umgesetzt wird, die im Hinblick auf einen Grenzwert überwacht wird, bei dessen Überschreitung die Schalteinrichtung ausgelöst wird.

Die Erfindung geht davon aus, daß der bei einem Erdschluß des Filterkreises im Bereich des Filtereingangs

Gud 2 Gr / 11.7.79

aus der Sammelschiene fließende Strom, der aus einer netzfrequenten Grundschwingung und einem Spektrum von Oberschwingungen besteht, für eine Auswertung nicht unmittelbar geeignet ist. Es werden daher zunächst die Oberschwingungen unterdrückt und lediglich die Grundschwingung ausgewertet. Die Oberschwingungen sowohl des gestörten Filterkreises als auch die Oberschwingungen von weiteren Filterkreisen, die sich über die Sammelschiene auf den Erdschluß entladen können, werden unterdrückt und können die Überwachung nicht beeinflussen. Lediglich die Grundschwingung des aus der Sammelschiene gezogenen Erdstromes wird zur weiteren Auswertung verwendet. Die Grundschwingung des Filterstromes wird gleichgerichtet und ohne Glättung von einem Grenzwertmelder überwacht. Durch den Verzicht auf ein Glättungsglied ist die Überwachung besonders schnell.

Eine vorteilhafte Ausführungsform der Erfindung enthält folgende Merkmale:

a) ein Stromwandler, der eine den Filterstrom abbildende Meßspannung abgibt,

b) ein von der genannten Meßspannung beaufschlagtes Tiefpaßfilter, das die Oberschwingungen im Sammelschienenstrom im Verhältnis zur netzfrequenten Grundschwingung hinreichen unterdrückt,

c) eine dem Tiefpaßfilter nachgeschaltete Vollweg-Gleichrichterschaltung, deren ungeglättete Ausgangsspannung einem Grenzwertmelder zugeführt ist, dessen Ansprechschwellenwert wenigstens der zweifachen Nennstromstärke entspricht.

0022952

Wenn in den Filterabzweig kein eigener Stromwandler eingeschaltet werden soll bzw. wenn auf der Sammelschiene bereits entsprechende Stromwandler vorhanden sind, so kann nach einer vorteilhaften Weiterbildung der Erfindung auf der Sammelschiene zu beiden Seiten des Filterabzweiges je ein Stromwandler angeordnet sein, wobei die Meßspannungen der beiden Stromwandler einer Vergleichseinrichtung zur Bildung einer den Filterstrom abbildenden Spannung zugeführt sind.

Eine besonders gute Unterdrückung der Oberschwingungen der den Filterstrom abbildenden Meßspannung bei vergleichsweise erheblich weniger gedämpfter Grundschwingung erhält man nach einer weiteren Ausgestaltung der Erfindung mit Hilfe eines mehrstufigen Tiefpaßfilters. Ein mehrstufiges Tiefpaßfilter ermöglicht es, kürzere Einschwingzeiten bei gleicher Dämpfung zu erreichen.

Ein Ausführungsbeispiel der Erfindung ist in der Zeichnung dargestellt und wird im folgenden näher beschrieben. Es zeigen:

FIG 1 eine schematische Darstellung eines erfindungsgemäßen Filtereingangsschutzes,

FIG 2 eine schematische Darstellung einer weiteren Ausführungsform eines erfindungsgemäßen Filtereingangsschutzes.

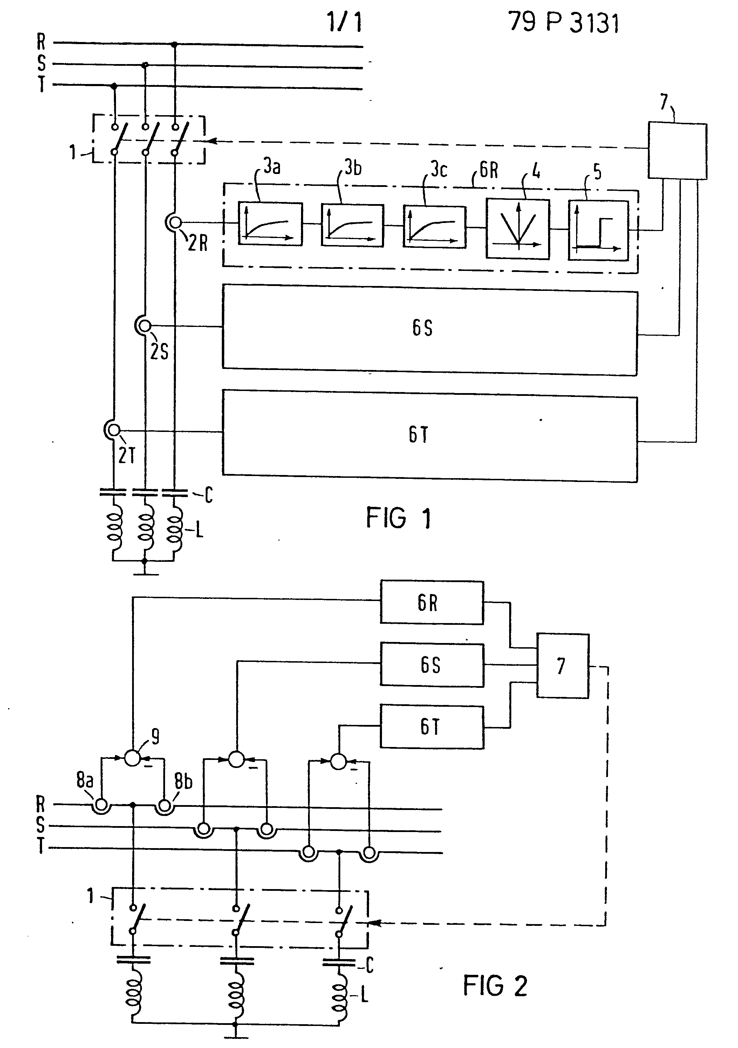

FIG 1 zeigt schematisch die Realisierung eines Filtereingangsschutzes bei einer Drehstrom-Sammelschiene mit den Phasen RST, an die eine dreiphasige Filteranordnung über

- 4 -        VPA 79 P 3 1 3 1 EUR

eine Schalteinrichtung 1 angeschlossen ist. Die Filteranordnung, die insbesondere auf die Frequenz einer
charakteristischen Oberschwingung abgestimmt sein kann,
besteht aus drei LC-Filterkreisen, die sternpunktseitig
geerdet sind. Die Kondensatoren von derartigen Filterkreisen sind üblicherweise als Kondensatorbatterien mit
mehreren parallelgeschalteten Strängen ausgebildet, in
denen jeweils eine große Anzahl von Kondensatoren in
Reihe geschaltet sind. Für jede Phase der Filteranordnung
ist eine gleichartig aufgebaute Überwachung vorgesehen;
es wird daher nur die Überwachung der Phase R nachstehend näher erläutert. Die Zahlenangaben beziehen
sich auf ein 50 Hz-Drehstromnetz und können ohne weiteres
auf ein Netz mit einer anderen Netzfrequenz umgerechnet
werden. Diese Zahlenangaben dienen lediglich dem einfacheren Verständnis der Erfindung; sie beschränken
jedoch nicht ihren Schutzbereich.

Bei einem Erdschluß des Filterkreises in der Nähe der
Sammelschiene, also hinter der Schalteinrichtung bis
zum Kondensator, bzw. bei einer aus einer Anzahl von
Teilkondensatoren aufgebauten Kondensatorbatterie bis
in den oberen Bereich der Kondensatorbatterie, fließt
ein sehr großer Strom aus der Sammelschiene gegen Erde.
Ein schwaches Netz bricht dabei in relativ kurzer Zeit
zusammen. Sofern an die Sammelschiene weitere Filteranordnungen angeschlossen sind, die beispielsweise auf
die Frequenz einer anderen Oberschwingung abgestimmt
sind, so können sich deren Filterkreise ebenfalls
über den Erdschluß entladen. Die gestörte Filteranordnung muß
daher so schnell wie möglich abgeschaltet werden.

Für jeden Filterkreis der dreiphasigen Filteranordnung ist ein Stromwandler 2R, 2S, 2T vorgesehen, der den Filterstrom in eine äquivalente Spannung an seiner Bürde umformt. Die Bürden müssen derart bemessen sein, daß sie die mehrfache Nennstromstärke verarbeiten können. Dem Stromwandler ist vorzugsweise ein als Spannungsfolger beschalteter elektronischer Verstärker zur Entkopplung nachgeschaltet, der auch das Sammelschienenpotential vom Elektronikpotential der Überwachung trennt, um Störungen von der Sammelschiene nicht in die Elektronik überzukoppeln.

Die den Filterstrom abbildende Meßspannung wird einer Auswerteschaltung 6R zugeführt. Den übrigen Phasen sind gleichartig aufgebaute Auswerteschaltungen 6S und 6T zugeordnet. Die beispielhaft näher erläuterte Auswerteschaltung 6R enthält ein dreistufiges Tiefpaßfilter mit den Stufen 3a, 3b, 3c, sowie eine nachgeschaltete Vollweg-Gleichrichterschaltung 4. Die Filteranordnung unterdrückt die Oberschwingungen im Sammelschienenstrom hinreichend. Wenn beispielsweise die Wechsel- oder Drehstromschiene von einer 12-pulsigen Stromrichterschaltung gespeist wird, bei der als charakteristische Oberschwingungen die 11. und 13., sowie die 23. und 25., usw. Harmonische auftreten, so wird die Zeitkonstante des ersten Tiefpaßfilters 3a insbesondere zu 0,23 ms, die Zeitkonstante des zweiten Tiefpaßfilters zu 2,7 ms und die Zeitkonstante des dritten Tiefpaßfilters zu 2,7 ms gewählt. Bei einer derartigen Auslegung der Filteranordnung werden die 11. und 13. Harmonischen bereits auf weniger als 1% unterdrückt, während die Grundschwingungsamplitude nur etwa um 50% erniedrigt wird.

- 6 -          VPA 79 P 3131 EUR

Die Ausgangsspannung der Filteranordnung wird in der
Vollweg-Gleichrichterschaltung 4 gleichgerichtet und
ungeglättet einem Grenzwertmelder 5 zugeführt. Der Ansprechschwellenwert des Grenzwertmelders ist beispielsweise auf den dreifachen Nennstrom eingestellt. Die Ausgangssignale der Grenzwertmelder für die Überwachung
der einzelnen Phasen der Filteranordnung werden einer
Auswerteeinrichtung 7 zugeführt, die die Schalteinrichtung 1 und entsprechende Anzeigen steuert.

FIG 2 zeigt eine analog aufgebauten Filtereingangsschutz. Zur Erfassung der Filterströme sind zu beiden
Seiten eines jeden Filterabzweigs jeweils zwei Stromwandler 8a und 8b vorgesehen. Die Meßspannungen der
beiden Stromwandler 8a, 8b werden in einem Vergleichsglied 9 miteinander verglichen. Die Ausgangsspannung
des Vergleichsgliedes 9, die ein Maß für den Filterstrom der Phase R darstellt, wird der Überwachungseinrichtung 6R zugeführt, die in der bereits beschriebenen Weise aufgebaut ist. Für die weiteren Phasen
der Filteranordnung sind entsprechende Maßnahmen getroffen. Bei der Anordnung nach FIG 2 sind auch die
zwischen den Stromwandlern 8a, 8b liegenden Stücke der
Sammelschiene in den Filtereingangsschutz einbezogen.

4 Patentansprüche
2 Figuren

Patentansprüche

1. Filtereingangsschutz für einen Filterkreis, der an eine Wechsel- oder Drehstromschiene über eine Schalteinrichtung angeschlossen ist, d a d u r c h   g e k e n n - z e i c h n e t , daß der in den Filterkreis fließende Strom meßtechnisch erfaßt wird und daß die netzfrequente Grundschwingung des Filterstromes durch Unterdrückung der Oberschwingungen gewonnen und durch Vollweggleichrichtung in eine gleichgerichtete Spannung umgesetzt wird, die im Hinblick auf einen Grenzwert überwacht wird, bei dessen Überschreitung die Schalteinrichtung ausgelöst wird.

2. Filtereingangsschutz nach Anspruch 1, g e k e n n - z e i c h n e t   durch folgende Merkmale:

a) ein Stromwandler, der eine den Filterstrom abbildende Meßspannung abgibt,

b) ein von der genannten Meßspannung beaufschlagtes Tiefpaßfilter, das die Oberschwingungen im Sammelschienenstrom im Verhältnis zur netzfrequenten Grundschwingung hinreichend unterdrückt,

c) eine dem Tiefpaßfilter nachgeschaltete Vollweg-Gleichrichterschaltung, deren ungeglättete Ausgangsspannung einem Grenzwertmelder zugeführt ist, dessen Ansprechschwellenwert wenigstens der zweifachen Nennstromstärke entspricht.

3. Filtereingangsschutz nach Anspruch 2, d a d u r c h
g e k e n n z e i c h n e t , daß auf der Stromschiene
zu beiden Seiten des Filterabzweiges je ein Stromwandler
angeordnet ist und daß die Meßspannungen der beiden
Stromwandler einer Vergleichseinrichtung zur Bildung
einer den Filterstrom abbildenden Spannung zugeführt
sind.

4. Filtereingangsschutz nach Anspruch 2, g e k e n n -
z e i c h n e t   durch die Verwendung eines mehrstufigen Tiefpaßfilters.

79 P 3131

FIG 1

FIG 2

Europäisches
Patentamt

EUROPÄISCHER RECHERCHENBERICHT

Nummer der Anmeldung

EP 80 10 3709

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 104 687 (J.A. ZULASKI)<br>* Spalte 5, Zeilen 5-54; Spalte 5, Zeile 63 - Spalte 6, Zeile 15; Spalte 6, Zeilen 23-25; Spalte 7, Zeilen 31-35; Spalte 7, Zeilen 58-64; Abbildungen 1-3 * | 1,2 |
| | GB - A - 2 008 345 (MULTILIN)<br>* Seite 2, Zeilen 50-93; Seite 3, Zeilen 86-96; Seite 4, Zeilen 101-121; Abbildungen 1,4 * | 1,2,4 |
| | DE - B - 2 451 353 (SIEMENS)<br>* Spalte 2, Zeilen 2-12; Abbildung 1 * | 3 |

KLASSIFIKATION DER ANMELDUNG (Int. Cl.)

H 02 H 7/00
3/16
7/16

RECHERCHIERTE SACHGEBIETE (Int. Cl.)

H 02 H 7/00
7/16
3/16
1/04
3/28

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 16-10-1980 | RUGGIU |

EPA form 1503.1 06.78